# FASCICULE DE BREVET EUROPEEN

(11) **EP 1 483 934 B1**
(45) Date de publication et mention de la délivrance du brevet: **30.04.2014**
(21) Numéro de dépôt: 03743402.4
(22) Date de dépôt: 06.03.2003
(51) Int. Cl.: H04W 8/20

(54) **PROCEDE POUR AMELIORER LA GESTION DE LA QUALITE DE SERVICE DANS UN SYSTEME CELLULAIRE DE RADIOCOMMUNICATIONS MOBILES EN MODE PAQUET**
VERFAHREN ZUR VERBESSERUNG DER DIENSTQUALITÄTSVERWALTUNG IN EINEM MOBILPAKETFUNKKOMMUNIKATIONSZELLULARSYSTEM
METHOD FOR IMPROVING QUALITY OF SERVICE MANAGEMENT IN A MOBILE PACKET RADIO COMMUNICATION CELLULAR SYSTEM

(30) Priorité: 06.03.2002 FR 0202859
(43) Date de publication de la demande: 08.12.2004
(73) Titulaire: Alcatel Lucent, 75007 Paris (FR)
(72) Inventeur: MUNIERE, Vincent, F-92190 Meudon (FR)
(74) Mandataire: El Manouni, Josiane
(86) Numéro de dépôt international: PCT/FR2003/000727
(87) Numéro de publication internationale: WO 2003/075594

(56) Documents cités:
- WO-A-00/38465
- WO-A2-00/79808
- US-A1- 2001 046 879
- "DIGITAL CELLULAR TELECOMMUNICATIONS SYSTEM (PHASE 2+) (GSM);UNIVERSAL MOBILE TELECOMMUNICATIONS SYSTEM (UMTS); GENERAL PACKET RADIO SERVICE (GPRS) SERVICE DESCRIPTION; Stage 2 ( 3GPP TS 23.060 version 4.3.0 Release 4) ETSI TS 123 060 v4.3.0" EUROPEAN TELECOMMUNICATION STANDARD, janvier 2002 (2002-01), pages 1-198, XP002222634 cité dans la demande
- "DIGITAL CELLULAR TELECOMMUNICATIONS SYSTEM (PHASE 2+);GENERAL PACKET RADIO SERVICE (GPRS);BASE STATION SYSTEM (BSS)-SERVING GPRS SUPPORT NODE (SGSN); BSS GPRS PROTOCOL (BSSGP) (3GPP TS 08.18 version 7.4.0 Release 1998) ETSI TS 101 343 v7.4.0" EUROPEAN TELECOMMUNICATION STANDARD,, janvier 2001 (2001-01), pages 1-64, XP002222635 cité dans la demande

## Description

La présente invention concerne d'une manière générale les systèmes cellulaires de radiocommunications mobiles.

La présente invention concerne plus particulièrement les services en mode paquet, tels que notamment le GPRS (pour "General Packet Radio Service") pour les systèmes de radiocommunications mobiles de type GSM (pour "Global System for Mobile communications").

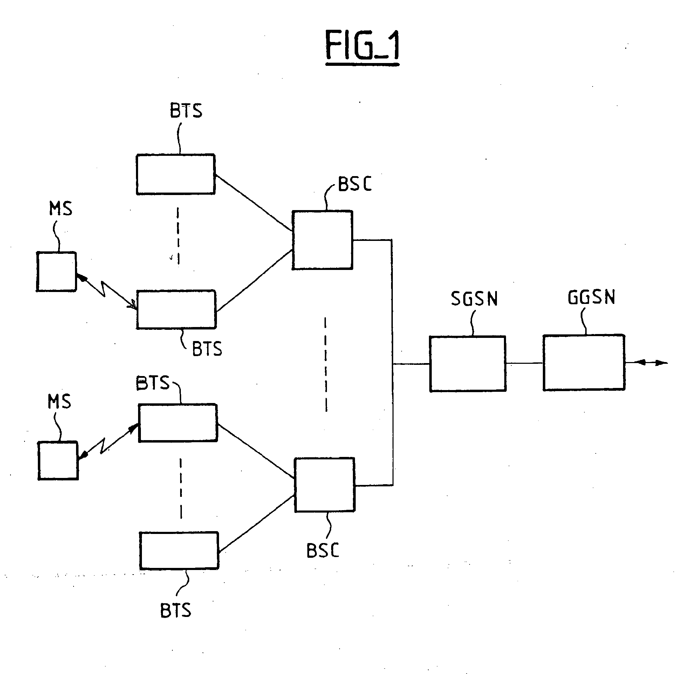

L'architecture des systèmes en mode paquet tels que par exemple les systèmes de type GPRS est rappelée sur la figure 1, elle comporte essentiellement :
- des stations de base ou BTS (pour "Base Transceiver Station"), en relation avec des stations mobiles ou MS (pour « Mobile Station »), et des contrôleurs de stations de base ou BSC (pour "Base Station Controller"), l'ensemble formé par les BTS et BSC étant aussi appelé BSS (pour "Base Station Subsystem"), ou plus généralement réseau d'accès radio, ou RAN (pour « Radio Access Network »),
- des entités telles que des noeuds de support GPRS serveurs, ou SGSN (pour "Serving GPRS Support Node"), en relation d'une part avec le BSS, et d'autre part avec des entités telles que des noeuds de support GPRS de transit, ou GGSN (pour « Gateway GPRS Support Node »), elles-mêmes en relation avec des réseaux extérieurs (non illustrés), l'ensemble formé par les SGSN et GGSN étant aussi appelé NSS, pour « Network Sub-System ») ou plus généralement réseau de coeur, ou CN (pour « Core Network »).

Selon l'architecture en couches utilisée pour décrire ces systèmes, on distingue, sur l'interface « Um » entre MS et BSS:
- une première couche, ou couche physique,
- une deuxième couche, ou couche liaison, elle-même divisée en plusieurs couches: par ordre de niveaux croissants, MAC (pour « Medium Access Control »), RLC (pour « Radio Link Control ») et LLC (pour « Logical Link Control »).

De même, on distingue, sur l'interface « Gb » entre BSS et SGSN:
- une première couche, ou couche physique,
- une deuxième couche, ou couche liaison, elle-même divisée en plusieurs couches : par ordre de niveaux croissants, « Frame Relay », BSSGP (pour « BSS GPRS Protocol»), et LLC (pour « Logical Link Control»).

Des trames appelées trames LLC (ou « LLC frames ») sont formées, dans la couche LLC, à partir d'unités de données de niveau supérieur. Dans les trames LLC ces unités de données sont appelées unités de données LLC-PDU (pour « LLC-Protocol Data Units» ).

Les unités de données LLC-PDU sont ensuite segmentées dans la couche RLC/MAC, de manière à former des blocs appelés blocs de données RLC (ou « RLC data blocks » en anglais). Les blocs de données RLC sont ensuite mis au format requis pour transmission sur l'interface « Um », dans la couche physique.

En outre, dans les couches RLC et LLC sont mises en oeuvre des procédures de re-transmission de données non correctement reçues (blocs de données RLC ou unités de données LLC-PDU selon le cas), selon une technique appelée aussi ARQ (pour "Automatic Repeat reQuest"). L'état, correct ou non, des blocs ou unités de données reçus est signalé par le récepteur à l'émetteur au moyen de messages dits d'acquittement (ou ACK, pour "ACKnowledgment") ou de non-acquittement (ou NACK, pour "Non-ACKnowledgment").

En outre, des protocoles de signalisation de niveau supérieur sont également prévus, notamment pour la gestion des ressources radio ou GRR (pour « GPRS Radio Resource Management »), la gestion de la mobilité ou GMM (pour « GPRS Mobility Management»), la gestion de session ou SM (pour « Session Management»), ...etc.

Pour une description plus détaillée de ces systèmes, on pourra se référer aux normes correspondantes, publiées par les organismes de normalisation correspondants.

Par ailleurs, ces systèmes ont une architecture cellulaire, et des techniques de transfert inter-cellulaire sont prévues pour transférer les communications en mode circuit de cellule à cellule selon les besoins.

Pour les services en mode paquet, on utilise généralement une procédure dite de resélection de cellule, et on distingue généralement plusieurs modes de contrôle de resélection de cellule, correspondant à des degrés d'autonomie décroissants de la station mobile, ou, ce qui revient au même, à des degrés de contrôle croissants par le réseau. Par exemple, dans le cas du GPRS, comme indiqué dans les spécifications 3GPP TS 05.08 et 3G TS 04.60 publiées par le 3GPP (« 3^{rd} Generation Partnership Project »):
- Suivant un premier mode de contrôle (appelé aussi NC0), la station mobile décide de manière autonome d'effectuer un tel transfert et sélectionne elle-même la cellule cible vers laquelle la communication est à transférer, en tenant compte des résultats de mesures qu'elle effectue.
- Suivant un deuxième mode de contrôle (appelé aussi NC1), la station mobile décide de manière autonome d'effectuer un tel transfert et sélectionne elle-même la cellule cible vers laquelle la communication est à transférer, en tenant compte de résultats de mesures qu'elle effectue, et transmet par ailleurs les résultats de ces mesures au réseau.
- Suivant un troisième mode de contrôle (appelé aussi NC2), le réseau décide d'effectuer un tel transfert et sélectionne la cellule cible vers laquelle la communication est à transférer, en tenant compte des résultats de mesures que lui transmet la station mobile.

Le mode de contrôle NC2 est aussi appelé resélection de cellule contrôlée par le réseau. Dans ce cas, une resélection de cellule est ordonnée par le réseau à la station mobile, dans un message appelé « Packet Cell Change Order» contenant l'identité de la cellule resélectionnée.

Les modes de contrôle NC0 et NC1 correspondent ainsi à un mode de resélection de cellule contrôlé par la station mobile. Dans ce cas la station mobile décide elle-même d'une resélection de cellule.

En outre, une procédure dite de « Cell Change Notification » (ou CCN) a été définie, dans la spécification 3G TS 44.060, pour le cas de stations mobiles opérant suivant les modes NC0 et NC1. Dans ce cas, la station mobile ayant décidé une resélection de cellule informe le réseau (BSS), dans un message appelé « Packet Cell Change Notification », de la cellule re-sélectionnée qu'elle propose. En réponse, le réseau peut notamment lui indiquer la cellule resélectionnée choisie, dans un message « Packet Cell Change Order » ou « Packet Cell Change Continue » contenant l'identité de cette cellule. Le mode de contrôle correspondant est aussi appelé resélection de cellule assistée par le réseau.

Une fois que la cellule cible vers laquelle transférer la communication en cours a été sélectionnée, suivant l'un ou l'autre de ces modes de contrôle, la station mobile doit encore accéder, en mode paquet, à cette cellule cible.

Il est pour cela nécessaire que la station mobile acquière certaines informations appelées aussi informations système (ou « system information » en anglais), diffusées sur un canal commun dans cette cellule cible, ce canal commun pouvant être, comme spécifié également dans le document précité, le canal PBCCH (pour « Packet Broadcast Control Channel » en anglais) ou le canal BCCH (pour « Broadcast Control Channel » en anglais). Dans le cas où le canal PBCCH est utilisé, ces informations système sont appelées informations système paquet (ou « Packet system information » en anglais). Ces informations système incluent notamment des informations indiquant à la station mobile comment accéder en mode paquet à cette cellule cible. En effet, contrairement à la procédure de « handover » prévue dans le cas du mode circuit, les ressources à utiliser dans la cellule cible ne sont pas prédéterminées par le réseau. Ces informations système incluent un certain nombre de paramètres permettant de configurer la re-sélection de cellule. Un certain nombre d'informations système sont nécessaires avant que la station mobile ne soit autorisée à faire un accès dans la cellule cible et diffèrent selon qu'elles sont transportées sur le canal PBCCH ou le BCCH.

Or le mode de diffusion de ces informations système nécessaires, sur le canal PBCCH ou BCCH, est tel que le temps d'acquisition de ces informations par la station mobile peut être extrêmement long, et n'est en outre pas pré-déterminé. Le transfert de données dans le sens descendant peut alors s'en trouver affecté. En effet, le SGSN continue à transférer des unités de données LLC-PDU au BSS qui tente de les délivrer à la station mobile sous forme de blocs de données RLC. Mais comme la station mobile est en train d'acquérir les informations système relatives à la cellule cible, beaucoup de blocs de données RLC seront perdus, c'est-à-dire ne seront pas reçus par la station mobile. En effet, comme spécifié dans la norme précitée, la station mobile est alors autorisée à suspendre les opérations en cours dans l'ancienne cellule, pendant la durée nécessaire, afin de recevoir les messages requis sur le BCCH ou PBCCH de la cellule cible. De nombreuses re-transmissions peuvent alors être nécessaires au niveau de la couche RLC/MAC et/ou de la couche LLC, ce qui a essentiellement pour inconvénients de retarder le transfert de données (et donc de dégrader la qualité de service), et de ne pas correspondre à une utilisation optimale des ressources radio.

Pour limiter ces inconvénients, selon la spécification 3GPP TS 08.18, dans le cas où le BSS a ordonné une re-sélection de cellule à une station mobile, les étapes suivantes peuvent être mises en oeuvre:
- la couche GMM fournit une primitive de service « GMM-RADIO-STATUS.req » à la couche BSSGP pour lui demander d'envoyer un message « RADIO-STATUS PDU » au SGSN,
- le message « RADIO-STATUS PDU » est transmis par le BSS, via la couche BSSGP, au SGSN, afin d'informer ce dernier qu'une re-sélection de cellule a été ordonnée par le réseau,
- la couche BSSGP dans le SGSN fournit alors une primitive de service « GMM-RADIO-STATUS.ind » à la couche GMM pour lui signaler qu'une re-sélection de cellule a été ordonnée par le BSS,
- le SGSN suspend alors le transfert d'unités de données LLC-PDU dans le sens descendant (vers la station mobile) en envoyant une primitive de service « LLGMM-SUSPEND-REQ » à la couche LLC,
- lorsqu'un message de mise à jour de cellule est reçu de la station mobile, indiquant que la re-sélection de cellule a été effectuée avec succès, la couche GMM du SGSN envoie alors une primitive de service « LLGMM-RESUME-REQ » à la couche LLC pour que le transfert d'unités de données LLC-PDU dans le sens descendant reprenne.

En outre, selon la spécification 3GPP TS 08.18, une procédure dite procédure de « FLUSH-LL » est mise en oeuvre, comportant les étapes suivantes:
- lorsqu'un message de mise à jour de cellule est reçu de la station mobile, indiquant que la re-sélection de cellule a été effectuée avec succès, le SGSN transmet un message appelé « FLUSH-LL PDU » à l'entité du BSS contrôlant l'ancienne cellule, afin d'initier l'une ou l'autre de deux procédures : effacement des unités de données LLC-PDU reçues par l'entité contrôlant l'ancienne cellule avant de transmettre le message « RADIO STATUS PDU », et non encore acquittées si LLC fonctionne en mode acquitté, ou transfert de ces unités de données à l'entité contrôlant la nouvelle cellule,
- l'entité du BSS contrôlant l'ancienne cellule transmet au SGSN un message appelé « FLUSH- LL-ACK PDU », indiquant si lesdites unités de données ont été effacées ou transférées.

Par ailleurs dans ces systèmes, il est nécessaire de prévoir une gestion de la qualité de service (ou QoS, pour « Quality of Service ») de manière à satisfaire les besoins des utilisateurs, en tenant compte d'une différenciation des applications et des utilisateurs, et tout en utilisant aussi efficacement que possible les ressources de transmission disponibles.

D'une manière générale, chaque service est défini par des paramètres ou attributs de qualité de service (tels que le débit binaire garanti, le délai de transfert, ...etc.), l'ensemble de ces paramètres ou attributs formant un profil de qualité de service. D'une manière générale, on peut distinguer des services dits temps réel (correspondant à du trafic sensible aux délais de transfert, tel que notamment la voix, ou encore du trafic à flux continu, ou « streaming »), et des services dits non temps réel (correspondant à du trafic peu sensible aux délais de transfert, tel que notamment le transfert de fichiers). Les systèmes en mode paquet ont plutôt été conçus initialement pour des services non temps réel, et des développements ou améliorations sont maintenant en cours pour optimiser ces systèmes pour des services temps réel.

Pour le GPRS, la gestion de la qualité de service a fait l'objet d'améliorations entre les versions R97 et R99 de la norme.

Dans la version R97 de la norme, seuls des services non temps réel peuvent être offerts aux utilisateurs. Ainsi, dans le sens montant, la station mobile peut indiquer des paramètres de QoS quand elle requiert l'établissement d'un TBF (pour « Temporary Block Flow ») dans le sens montant, en utilisant une procédure d'accès dite en deux phases. Dans le sens descendant, chaque LLC PDU reçue du SGSN contient un élément d'information appelé « QoS Profile Information Element », donnant des informations limitées sur la qualité de service. Ces paramètres peuvent être utilisés par le BSS pour effectuer dans une certaine mesure une différenciation de services.

Dans la version R99 de la norme, une nouvelle procédure, ou procédure de création de « BSS Packet Flow Context» a été introduite, définie notamment dans les spécifications 3GPP TS 23.060 et 3GPP TS 08.18. Cette procédure autorise la négociation entre le SGSN et le BSS de tous les paramètres de QoS à offrir pour le transfert de toute LLC- PDU se rapportant au PFC (« Packet Flow Context ») ainsi créé. Le SGSN peut aggréger le transfert de LLC-PDUs correspondant à plusieurs contextes PDP donnés (ou « PDP Context », où PDP est utilisé pour « Packet Data Protocol ») dans un même PFC. Ceci est possible si les PDP Contexts aggrégés ont des contraintes de qualité de service proches. Les paramètres de QoS ainsi négociés sont ceux définis dans la version R99 et contiennent beaucoup plus d'informations que le profil de QoS défini dans la version R97. Ils contiennent en particulier toutes les variables nécessaires pour la définition d'un service temps réel.

On rappelle que lorsqu'une session doit être établie dans un système tel que le GPRS, une procédure d'activation contextuelle de protocole de données en mode paquet (ou PDP, pour « Packet Data Protocol ») doit être lancée. Le contexte de PDP (ou « PDP context ») contient les informations nécessaires au transfert des données entre MS et GGSN (informations de routage, profil de QoS, ...etc.). Lorsqu'il active un contexte PDP, si la fonctionnalité Packet Flow Context est implémentée dans le BSS et le SGSN, ce dernier peut requérir des paramètres de QoS du BSS qui peut négocier tout ou partie de ces paramètres en fonction de sa charge et de ses capacités. Ceci signifie que les données associées à un contexte PDP et donc à une QoS donnée sont bien identifiées non seulement dans le réseau de coeur CN mais aussi dans le réseau d'accès radio RAN. Ceci permet d'assurer que la QoS offerte pour le contexte PDP est négociée entre tous les noeuds de réseau, et il devient ainsi possible de garantir certains attributs de qualité de service. Il est ainsi possible d'obtenir qu'un débit binaire garanti ou un délai de transfert maximum soit offert, ce qui permet d'offrir des services temps réel.

Pour supporter des applications temps réel il est nécessaire que le BSS soit capable d'offrir le débit requis et aussi de transférer les LLC PDUs reçues dans les limites du délai de transfert maximum. Pour cela, il est nécessaire qu'il y ait aussi peu que possible de mise en file d'attente dans le BSS (on rappelle que la mise en file d'attente est propre au transfert utilisé dans les systèmes en mode paquet), et que les interruptions de transfert (dues notamment aux re-sélections de cellule, comme rappelé précédemment) soient aussi courtes que possible. Ceci requiert que le BSS connaisse toujours les spécifications de QoS pour le transfert de telles données, ou en d'autres termes qu'il dispose d'un contexte contenant des informations de profil de QoS associées.

Comme spécifié dans le document 3GPP TS 23.060, la procédure de création de « BSS Packet Flow Context» comporte notamment les échanges de messages suivants:
- message « Download BSS Packet Flow Context Request », transmis dans le sens BSS vers SGSN et contenant notamment une identification de station mobile et une identification de flux de paquet (ou « Packet Flow Id »),
- message « Create BSS Packet Flow Context Request », transmis dans le sens SGSN vers BSS, et contenant notamment une identification de station mobile, une identification de flux de paquet (ou « Packet Flow Id »), et un profil de QoS requis pour un ensemble de contextes PDP qui partagent un même flux de paquet (ou « Aggregate BSS QoS Profile Requested»,
- message « Create BSS Packet Flow Context Acknowledge », transmis dans le sens BSS vers SGSN, et contenant notamment une identification de station mobile, une identification de flux de paquet (ou « Packet Flow Id »), et un profil de QoS négocié pour un ensemble de contextes PDP qui partagent un même flux de paquet (ou « Aggregate BSS QoS Profile Negociated».

Selon la procédure de création de « BSS Packet Flow Context», le SGSN peut à tout moment requérir la création d'un contexte appelé « BSS Packet Flow Context » (ou plus simplement dans ce qui suit PFC), notamment lors de l'activation d'un contexte PDP.

Il est aussi prévu que si le BSS reçoit une requête pour transférer une LLC PDU dans le sens montant ou dans le sens descendant, pour laquelle il n'a pas actuellement de PFC, et pour lequel l'identification de flux de paquet (ou PFI, pour « Packet Flow Identity ») n'indique pas une QoS « au mieux » (ou « best effort » en anglais), ni une QoS pour le transfert d'un message court (ou SMS, pour « Short Message Service »), ni une QoS pour le transfert de signalisation , ni une QoS pour le transfert d'un message de localisation (ou LCS, pour « Localisation Services »), alors le BSS peut initier la procédure de création de « BSS Packet Flow Context » en envoyant un message « Download-BSS-PFC PDU » au SGSN. Un tel scenario devrait se produire, notamment, dans le cas de re-sélection de cellule (en effet, un PFC étant créé lors de l'activation d'un contexte PDP, un tel scenario ne devrait pas se produire dans ce cas). Il est précisé dans la spécification 3GPP TS 23.060 que jusqu'à ce que le BSS reçoive le PFC, le BSS traite les transferts dans le sens montant et descendant selon un profil de QoS par défaut dit « au mieux » (ou « best effort » en anglais).

Il est cependant indiqué, dans la spécification 3GPP TS 08.18, que sur mise en oeuvre de la procédure de « FLUSH-LL » (telle que rappelée plus haut) le contexte de BSS (ou « BSS context », asocié à une station mobile et pouvant contenir plusieurs PFCs) peut être conservé si le BSS est capable de transférer à la nouvelle cellule des LLC PDUs encore en file d'attente dans l'ancienne cellule.

Les différentes procédures ou étapes ainsi mises en oeuvre dans le cas de re-sélection de cellule peuvent être rappelées de la façon suivante.

Dans une première étape , un transfert est en cours entre les entités SGSN et MS.

Dans une deuxième étape , une re-sélection de cellule se produit. Des fonctionnalités ont été prévues dans la norme pour minimiser la durée des interruptions du transfert dans le cas de re-sélection de cellule (notamment l'utilisation de la procédure de re-sélection de cellule assistée par le réseau, éventuellement combinée à la procédure NC2). Par ailleurs, dans la mesure où le changement de cellule se produit dans la même zone de routage (ou « routing area ») ce qui correspond à la situation la plus probable, les LLC PDUs stockées dans l'ancienne cellule peuvent être re-routées vers la nouvelle cellule sur ordre du SGSN, comme indiqué au moyen de la procédure de FLUSH-LL .

Il est à noter que bien que le BSS ne devrait pas avoir beaucoup de données temps réel stockées dans sa file d'attente dans des conditions nominales, ceci peut ne pas être vrai dans le cas de re-sélection de cellule. En effet, jusqu'à ce que le SGSN ait été informé d'une re-sélection de cellule par un message « Radio Status PDU », le SGSN continue à envoyer des données au BSS dans l'ancienne cellule, jusqu'à ce qu'il reçoive une mise à jour de cellule indiquant le changement de cellule. Par ailleurs, le BSS n'est pas autorisé à envoyer un message « Radio Status PDU » lorsque la procédure de re-sélection de cellule assistée par le réseau est utilisée; dans ce cas le SGSN ne reçoit donc pas de message « Radio Status PDU » et continue à envoyer des LLC PDUs à l'ancienne cellule pendant toute la re-séledion de cellule.

Dans le cas où un re-routage de LLC PDUs est ordonné par le SGSN après qu'il ait reçu une mise à jour de cellule de la station mobile (ce qui est la situation la plus probable afin d'éviter une perte de LLC PDUs), et dans le cas où le contexte de BSS peut être conservé, alors le BSS contrôlant la nouvelle cellule, ou BSSnew (qui peut être le même que le BSS contrôlant l'ancienne cellule) retrouvera dans la file d'attente de la station mobile des LLC PDUs contenant un PFI associé à ce contexte. Dans ce cas, ces LLC PDUs pourront être transférées avec la QoS appropriée puisque le contexte est connu.

Ainsi que l'a observé le demandeur, un problème peut cependant se poser, dans le cas où des LLC PDUs peuvent être transférées de l'ancienne cellule vers la nouvelle cellule, mais où les PFCs associés, négociés pour l'ancienne cellule, ne peuvent être conservés dans la nouvelle cellule (pour diverses raisons telles que notamment un manque de ressources dans la nouvelle cellule, ...etc). Dans ce cas, le SGSN reprend le transfert, mais ce transfert ne peut être assuré dans la nouvelle cellule avec la QoS appropriée. Le BSS enverra alors ces données en utilisant un profil de QoS par défaut tel qu'un profil « au mieux » . Dans le cas où de telles données correspondent à du trafic temps réel (tel que par exemple du trafic à flux continu, ou « streaming » en anglais), alors les contraintes de temps réel ne pourront pas être satisfaites, ce qui aura des effets inacceptables au niveau de l'application.

Un besoin existe donc pour éviter de tels inconvénients, ou plus généralement pour améliorer la gestion de la qualité de service, dans un tel système.

La présente invention a notamment pour but de répondre à ce besoin.

Un des objets de la présente invention est un procédé pour améliorer la gestion de la qualité de service dans un système cellulaire de radiocommunications mobiles en mode paquet, procédé dans lequel :
- dans le cas de changement de cellule, d'une ancienne cellule vers une nouvelle cellule, des informations de profil de qualité de service négocié dans l'ancienne cellule sont transférées à la nouvelle cellule,
- une procédure additionnelle de gestion de la qualité de service est en outre prévue, de manière à éviter une dégradation de qualité de service dans le cas où le profil de qualité de service négocié dans l'ancienne cellule ne peut pas être offert dans la nouvelle cellule.

Suivant une autre caractéristique, ledit transfert d'informations de profil de qualité de service est requis par une entité de réseau de coeur, notamment SGSN ("Serving GPRS Support Node"), à une entité de réseau d'accès radio, notamment BSS (« Base Station Subsystem »).

Suivant une autre caractéristique, les informations de profil de qualité de service transférées correspondent à un contexte de BSS ou « BSS Context » (« Base Station Subsystem Context ») associé à une station mobile et pouvant contenir plusieurs contextes de flux paquet ou PFC (« Packet Flow Context »).

Suivant une autre caractéristique, le profil de qualité de service négocié pour chaque contexte de flux paquet ou PFC (« Packet Flow Context ») dans l'ancienne cellule correspond à un profil de qualité de service aggrégé ou ABQP (« Aggregate BSS QoS Profile »).

Suivant une autre caractéristique, dès qu'il y a un contexte de sous-système de station de base ou « BSS Context » (« Base Station Subsystem Context ») pour une station mobile dans l'ancienne cellule, une entité de réseau d'accès radio, notamment BSS (« Base Station Subsystem ») suppose que le profil de qualité de service aggrégé ou ABQP (« Aggregate BSS QoS Profile ») qui a été négocié pour chaque contexte de flux paquet ou PFC (« Packet flow Context ») dans l'ancienne cellule est requis dans la nouvelle cellule par une entité de réseau de coeur, notamment SGSN ("Serving GPRS Support Node").

Suivant une autre caractéristique, ladite procédure additionnelle de gestion de la qualité de service comporte :
- une étape selon laquelle une entité de réseau de coeur, notamment SGSN ("Serving GPRS Support Node") communique à une entité de réseau d'accès radio, notamment BSS (« Base Station Subsystem »), la priorité relative associée au transfert des informations de profil de qualité de service, pour différents contextes de flux paquet pour une même station mobile.

Suivant une autre caractéristique, ladite procédure additionnelle de gestion de la qualité de service comporte :
- une étape selon laquelle une entité de réseau d'accès radio, notamment BSS (« Base Station Subsystem »), communique à une entité de réseau de coeur, notamment SGSN ("Serving GPRS Support Node"), des informations relatives à la faisabilité dudit transfert d'informations de profil de qualité de service.

Suivant une autre caractéristique, ladite procédure additionnelle de gestion de la qualité de service comporte :
- une étape selon laquelle une entité de réseau d'accès radio, notamment BSS (« Base Station Subsystem »), communique à une entité de réseau de coeur, notamment SGSN ("Serving GPRS Support Node"), des informations indiquant si les contextes de flux paquet PFC(s) d'une station mobile peuvent être transférés ou non à la nouvelle cellule.

Suivant une autre caractéristique, des informations relatives à la faisabilité dudit transfert d'informations de profil de qualité de service sont communiquées pour différents contextes de flux paquet pour une même station mobile.

Suivant une autre caractéristique, lesdites informations relatives à la faisabilité dudit transfert d'informations de profil de qualité de service comportent une raison pour laquelle des informations de profil de qualité de service n'ont pu être transférées.

Suivant une autre caractéristique, lesdites informations relatives à la faisabilité dudit transfert d'informations de profil de qualité de service comportent un profil de qualité de service qui peut être offert dans la nouvelle cellule.

Suivant une autre caractéristique, ladite procédure additionnelle de gestion de la qualité de service comporte:
- une étape selon laquelle, lorsque des informations de profil de qualité de service ne peuvent transférées, est mise en oeuvre une procédure de création de nouveau contexte de flux paquet, pour la nouvelle cellule, ledit contexte étant caractérisé par un profil de qualité de service adapté à la nouvelle cellule, ladite adaptation prenant en compte le profil de qualité de service que le réseau d'accès radio indique pouvoir offrir dans la nouvelle cellule.

Suivant une autre caractéristique, ladite procédure additionnelle de gestion de la qualité de service comporte:
- une étape selon laquelle, lorsque des informations de profil de qualité de service ne peuvent transférées, une entité de réseau de coeur, notamment SGSN ("Serving GPRS Support Node"), adapte lesdites informations de profil de qualité de service, et un transfert est de nouveau tenté après la création d'un nouveau contexte de flux paquet.

Suivant une autre caractéristique, une entité de réseau coeur, notamment SGSN ("Serving GPRS Support Node"), et une entité de réseau d'accès radio, notamment BSS (« Base Station Subsystem ») se communiquent des informations nécessaires à la mise en oeuvre dudit procédé au moyen d'une procédure permettant un transfert vers la nouvelle cellule de données en attente dans l'ancienne cellule.

Suivant une autre caractéristique, ladite procédure est une procédure de type « FLUSH-LL ».

Suivant une autre caractéristique, lesdites informations communiquées par ladite entité de réseau coeur à ladite entité de réseau d'accès radio sont transmises dans un message « FLUSH-LL PDU».

Suivant une autre caractéristique, lesdites informations communiquées par ladite entité de réseau d'accès radio à ladite entité de réseau coeur sont transmises dans un message « FLUSH-LL-ACK PDU».

Un autre objet de la présente invention est une entité de réseau de coeur, pour système cellulaire de radiocommunications mobiles en mode paquet, notamment une entité de type SGSN ("Serving GPRS Support Node") comportant des moyens adaptés pour mettre en oeuvre un tel procédé.

Un autre objet de la présente invention est une entité de réseau d'accès radio, pour système cellulaire de radiocommunications mobiles en mode paquet, notamment une entité de type BSS (« Base Station subsystem ») comportant des moyens adaptés pour mettre en oeuvre un tel procédé.

D'autres objets et caractéristiques de la présente invention apparaîtront à la lecture de la description suivante d'exemples de réalisation, faite en relation avec les dessins ci-annexés dans lesquels:
- la figure 1 (décrite précédemment) est un schéma destiné à rappeler l'architecture générale d'un système cellulaire de radiocommunications mobiles de type GPRS.

Différents exemples possibles de mise en oeuvre de la présente invention sont donnés à titre d'illustration dans ce qui suit.

La procédure de FLUSH-LL (telle que définie dans la spécification 3GPP TS 08.18) est avantageusement utilisée pour réaliser un procédé suivant l'invention, par exemple selon l'un ou l'autre des exemples suivants.

Premièrement, le message « FLUSH-LL-PDU » pourrait contenir une liste classée par ordre de priorité de PFCs à transférer à la nouvelle cellule. Par ce classement, le SGSN pourrait indiquer l'importance relative du transfert de PFCs à la nouvelle cellule. En effet, si la station mobile a plusieurs PFCS actifs mais si seulement un nombre limité d'entre eux peut être transféré du fait d'un manque de ressources dans la cellule cible, il serait préférable que le SGSN indique lesquels devraient être transférés en priorité. Une solution alternative serait de simplement requérir un transfert de PFCs à la cellule cible. Cette requête peut être implicite et ne pas demander de champ nouveau dans le message « FLUSH-LL-PDU ».

En d'autres termes, parmi les informations fournies par le SGSN au BSSGP au cours de la procédure de « FLUSH-LL », l'invention propose d'ajouter les informations suivantes :
- de manière optionnelle, s' il y a un contexte de BSS pour la station mobile MS, identifié par le TLLI (« Temporary Logical Link identifier» ) dans l'ancien BVCI (« BSSGP Virtual Connection Identifier ») correspondant à l'ancienne cellule, une liste classée par priorités des BSS PFC qui devraient être transférés au nouveau BVCI (correspondant à la nouvelle cellule) . L'absence d'une telle liste bien qu'il y ait un contexte de BSS signifie que le SGSN demande le transfert de tout le contexte de BSS, sans préférence selon laquelle les BSS PFCs devraient être transférés. Qu'il y ait ou non une telle liste classée par priorités, dès qu'il y a un contexte de BSS pour la station mobile MS dans l'ancien BVCI, le BSS suppose que le profil ABQP (« Aggregate BSS QoS Profile ») qui a été négocié pour chaque PFC dans l'ancien BVCI est requis dans la nouvelle cellule par le SGSN.

Deuxièmement, le message « FLUSH-LL-ACK PDU » pourrait contenir une information indiquant si les PFC(s) de la station mobile peuvent être transférés ou non à la nouvelle cellule. Dans le cas où il n'est pas possible de les transférer (tous), ce message pourrait contenir :
- quels PFC(s) n'ont pas pu être transférés,
- pour chaque PFC qui n'a pas pu être transféré, une indication de la raison (débit garanti trop élevé, délai de transfert trop court, ...etc.). De manière optionnelle, il serait possible de fournir explicitement les paramètres de QoS tels que proposés par le BSS, en supposant que le SGSN a demandé le transfert des PFCs avec la même QoS négociée que celle obtenue dans l'ancienne cellule,
- dans le cas où aucun des PFCs de la station mobile ne pourrait être transféré, parce que le BSS n'en aurait pas la capacité, alors une cause distincte pourrait être introduite.

En d'autres termes, en réponse à un message « FLUSH-LL PDU » le BSS envoit un message « FLUSH-LL-ACK PDU » au SGSN, et l'invention propose d'inclure dans ce message les informations suivantes:
- de manière optionnelle, une indication de quels BSS PFCs n'ont pas pu être transférés au nouveau BVCI, dans le cas où le BSS n'a pas pu transférer tous les PFCs du contexte de BSS associé à la station mobile MS identifiée par le TLLI. Pour chacun de ces PFCs, le BSS peut aussi inclure le profil ABQP (« Aggregate BSS QoS Profile ») qui peut être accepté dans le nouveau BVCI. Le BSS peut en effet ne pas avoir été capable de transférer tous les PFCs du contexte de BSS dans le cas où les resources disponibles ou les capacités du BSS dans le nouveau BVCI n'étaient pas suffisantes pour supporter le profil ABQP requis.

Troisièmement, si le SGSN reçoit un message « FLUSH-LL-ACK PDU » indiquant qu'un PFC n'a pas pu être transféré et s'il a de nouvelles LLC PDUs à envoyer, associées à ce PFC, alors le SGSN pourrait utiliser la procédure de « Create BSS PFC » avant de reprendre le transfert. Ceci éviterait de transférer des LLC PDUs identifiées par un PFI que le BSS ne connaît pas. Le SGSN pourrait aussi utiliser la raison de l'échec du transfert de PFCs pour adapter la QoS requise, au lieu d'avoir à attendre un message « Create BSS PFC NACK ». Si l'option de fournir explicitement les paramètres négociés dans le message « FLUSH-LL-ACK PDU » est utilisée, la procédure serait alors probablement plus efficace.

En d'autres termes, sur réception d'un message « FLUSH-LL-ACK PDU » par le SGSN, indiquant que les LLC PDUs associées à l'ancien BVC ont été « effacées » ou « transférées », s'il indique que certains BSS PFCs n'ont pas pu être transférés au nouveau BVCI, alors le SGSN peut utiliser cette information pour créer les BSS PFCs correspondants dans la nouvelle cellule avant qu'il recommence à transférer de nouvelles LLC PDUs dans le sens descendant pour ces PFCs. La création d'un BSS PFC est décrite dans la section 8.1. Lorsqu'il crée un BSS PFC qui n'a pas pu être transféré au nouveau BVCI, le SGSN peut prendre en compte le profil ABQP qui peut être accepté dans le nouveau BVCI, s'il a été reçu dans le message « FLUSH-LL-ACK PDU ».

Si le SGSN reprend le transfert de nouvelles LLC PDUs dans le sens descendant pour un PFC, qui n'ont pas pu être transférées au nouveau BVCI, dès qu'il reçoit le message « FLUSH-LL-ACK PDU » alors ces LLC PDUs dans le sens descendant seront traitées par le BSS selon un profil ABQP par défaut « au mieux ». Le profil ABQP par défaut « au mieux » peut conduire à une QoS inacceptable pour l'utilisateur final de l'application.

En d'autres termes encore, l'invention propose, notamment, d'utiliser la procédure de FLUSH-LL pour indiquer au SGSN si tous les PFCs ont pu etre transférés (dans ce cas, il n'y a pas besoin de lancer une procedure de creation de PFC) ou non. Dans le cas ou un PFC donné n'a pu être transféré, le BSS pourra indiquer la QoS qui serait acceptable. Ensuite le SGSN pourra créer le PFC dans la nouvelle cellule, en prenant en compte l'indication faite par la BSS de quelle QoS est acceptable. Une fois cette procédure finie, le SGSN pourra reprendre son transfert.

La présente invention a également pour objet une entité de réseau coeur, notamment une entité de type SGSN ("Serving GPRS Support Node"), et une entité de réseau d'accès radio, notamment une entité de type BSS (« Base Station Subsystem ») comportant des moyens adaptés pour mettre en oeuvre un procédé suivant l'invention.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour améliorer la gestion de la qualité de service dans un système cellulaire de radiocommunications mobiles en mode paquet, procédé **caractérisé en ce que** :
- dans le cas de changement de cellule, d'une ancienne cellule vers une nouvelle cellule, des informations de profil de qualité de service négocié dans l'ancienne cellule sont transférées à la nouvelle cellule, ledit transfert d'informations de profil de qualité de service étant requis par une entité SGSN "Serving GPRS Support Node", à une entité BSS « Base Station Subsystem » dans un message FLUSH-LL PDU, et les informations de profil de qualité de service transférées correspondant à un contexte de sous-système de station de base ou « BSS Context » « Base Station Subsystem Context » associé à une station mobile et pouvant contenir plusieurs contextes de flux paquet ou PFC « Packet flow Context »,
- une procédure additionnelle de gestion de la qualité de service est en outre prévue, de manière à éviter une dégradation de qualité de service dans le cas où le profil de qualité de service négocié dans l'ancienne cellule ne peut pas être offert dans la nouvelle cellule, ladite procédure additionnelle de gestion de la qualité de service comportant une étape selon laquelle, lorsque des informations de profil de qualité de service ne peuvent être transférées, est mise en oeuvre une procédure de création de nouveau contexte de flux paquet, pour la nouvelle cellule, ledit contexte étant **caractérisé par** un profil de qualité de service adapté à la nouvelle cellule, ladite adaptation prenant en compte le profil de qualité de service que le réseau d'accès radio indique pouvoir offrir dans la nouvelle cellule.

2. Procédé selon la revendication 1, dans lequel le profil de qualité de service négocié pour chaque contexte de flux paquet ou PFC « Packet flow Context » dans l'ancienne cellule correspond à un profil de qualité de service aggrégé ou ABQP « Aggregate BSS QoS Profile ».

3. Procédé selon la revendication 2, dans lequel dès qu'il y a un contexte de sous-système de station de base ou « BSS Context » « Base Station Subsystem Context » pour une station mobile dans l'ancienne cellule, une entité de réseau d'accès radio, notamment BSS « Base Station Subsystem », suppose que le profil de qualité de service aggrégé ou ABQP « Aggregate BSS QoS Profile » qui a été négocié pour chaque contexte de flux paquet ou PFC « Packet flow Context » dans l'ancienne cellule est requis dans la nouvelle cellule par une entité de réseau coeur, notamment SGSN "Serving GPRS Support Node".

4. Procédé selon l'une des revendications 1 à 3, dans lequel ladite procédure additionnelle de gestion de qualité de service comporte :
- une étape selon laquelle une entité BSS « Base Station Subsystem », communique à une entité SGSN "Serving GPRS Support Node" , des informations relatives à la faisabilité dudit transfert d'informations de profil de qualité de service.

5. Procédé selon l'une des revendications 1 à 4, dans lequel ladite procédure additionnelle de gestion de la qualité de service comporte :
- une étape selon laquelle une entité BSS « Base Station Subsystem », communique à une entité SGSN "Serving GPRS Support Node" , des informations indiquant si les contextes de flux paquet PFCs d'une station mobile peuvent être transférés ou non à la nouvelle cellule.

6. Procédé selon l'une des revendications 1 à 5, dans lequel une entité SGSN "Serving GPRS Support Node", et une entité BSS « Base Station Subsystem » se communiquent des informations nécessaires à la mise en oeuvre dudit procédé au moyen d'une procédure permettant un transfert vers la nouvelle cellule de données en attente dans l'ancienne cellule.

7. Procédé selon la revendication 6, dans lequel ladite procédure est une procédure de type « FLUSH-LL ».

8. Procédé selon la revendication 7, dans lequel lesdites informations communiquées par ladite entité SGSN à ladite entité BSS sont transmises dans un message « FLUSH-LL PDU».

9. Procédé selon la revendication 7, dans lequel lesdites informations communiquées par ladite entité BSS à ladite entité SGSN sont transmises dans un message « FLUSH-LL-ACK PDU».

10. Entité SGSN "Serving GPRS Support Node" pour système cellulaire de radiocommunications mobiles en mode paquet, , **caractérisée en ce qu'**elle comporte :
- des moyens pour, dans le cas de changement de cellule, d'une ancienne cellule vers une nouvelle cellule, requérir d'une entité BSS « Base Station Subsystem », dans un message FLUSH-LL PDU, un transfert à la nouvelle cellule d'informations de profil de qualité de service négocié dans l'ancienne cellule, les informations de profil de qualité de service transférées correspondent à un contexte de sous-système de station de base ou « BSS Context » « Base Station Subsystem Context » associé à une station mobile et pouvant contenir plusieurs contextes de flux paquet ou PFC « Packet flow Context », et le profil de qualité de service négocié pour chaque contexte de flux paquet ou PFC « Packet flow Context » dans l'ancienne cellule correspond à un profil de qualité de service aggrégé ou ABQP « Aggregate BSS QoS Profile »,
- des moyens pour, en outre, mettre en oeuvre une procédure additionnelle de gestion de la qualité de service, de manière à éviter une dégradation de qualité de service dans le cas où le profil de qualité de service négocié dans l'ancienne cellule ne peut pas être offert dans la nouvelle cellule, lesdits moyens pour mettre en oeuvre ladite procédure additionnelle de gestion de la qualité de service comportant des moyens pour, lorsque des informations de profil de qualité de service ne peuvent être transférées, mettre en oeuvre une procédure de création de nouveau contexte de flux paquet, pour la nouvelle cellule, ledit contexte étant **caractérisé par** un profil de qualité de service adapté à la nouvelle cellule, ladite adaptation prenant en compte le profil de qualité de service que le réseau d'accès radio indique pouvoir offrir dans la nouvelle cellule.

11. Entité selon la revendication 10, dans laquelle lesdits moyens pour mettre en oeuvre ladite procédure additionnelle de gestion de qualité de service comportent :
- des moyens pour recevoir d'une entité BSS « Base Station Subsystem », des informations relatives à la faisabilité dudit transfert d'informations de profil de qualité de service.

12. Entité selon l'une des revendications 10 ou 11, dans laquelle lesdits moyens pour mettre en oeuvre ladite procédure additionnelle de gestion de la qualité de service comportent :
- des moyens pour recevoir d'une entité BSS « Base Station Subsystem », des informations indiquant si les contextes de flux paquet PFCs d'une station mobile peuvent être transférés ou non à la nouvelle cellule.

13. Entité selon l'une des revendications 10 à 12, comportant des moyens pour communiquer des informations nécessaires avec une entité BSS « Base Station Subsystem » au moyen d'une procédure permettant un transfert vers la nouvelle cellule de données en attente dans l'ancienne cellule.

14. Entité selon la revendication 13, dans laquelle ladite procédure est une procédure de type « FLUSH-LL ».

15. Entité selon la revendication 14, dans laquelle lesdites informations communiquées par ladite entité SGSN à ladite entité BSS sont transmises dans un message « FLUSH-LL PDU».

16. Entité selon la revendication 14, dans laquelle lesdites informations communiquées par ladite entité BSS à ladite entité SGSN sont transmises dans un message « FLUSH-LL-ACK PDU».

17. Entité BSS "Base Station Subsystem" pour système cellulaire de radiocommunications mobiles en mode paquet, , **caractérisée en ce qu'**elle comporte :
- des moyens pour, dans le cas de changement de cellule, d'une ancienne cellule vers une nouvelle cellule, transférer des informations de profil de qualité de service négocié dans l'ancienne cellule, à la nouvelle cellule, sur requête d'une entité SGSN "Serving GPRS Support Node" dans un message FLUSH-LL PDU, les informations de profil de qualité de service transférées correspondent à un contexte de sous-système de station de base ou « BSS Context » « Base Station Subsystem Context » associé à une station mobile et pouvant contenir plusieurs contextes de flux paquet ou PFC « Packet flow Context », et le profil de qualité de service négocié pour chaque contexte de flux paquet ou PFC « Packet flow Context » dans l'ancienne cellule correspond à un profil de qualité de service aggrégé ou ABQP « Aggregate BSS QoS Profile »
- des moyens pour en outre mettre en oeuvre une procédure additionnelle de gestion de la qualité de service, de manière à éviter une dégradation de qualité de service dans le cas où le profil de qualité de service négocié dans l'ancienne cellule ne peut pas être offert dans la nouvelle cellule, lesdits moyens pour mettre en oeuvre ladite procédure additionnelle de gestion de la qualité de service comportant des moyens pour, lorsque des informations de profil de qualité de service ne peuvent être transférées, mettre en oeuvre une procédure de création de nouveau contexte de flux paquet, pour la nouvelle cellule, ledit contexte étant **caractérisé par** un profil de qualité de service adapté à la nouvelle cellule, ladite adaptation prenant en compte le profil de qualité de service que le réseau d'accès radio indique pouvoir offrir dans la nouvelle cellule.

18. Entité selon la revendication 17, dans laquelle dès qu'il y a un contexte de sous-système de station de base ou « BSS Context » « Base Station Subsystem Context » pour une station mobile dans l'ancienne cellule, ladite entité suppose que le profil de qualité de service aggrégé ou ABQP « Aggregate BSS QoS Profile » qui a été négocié pour chaque contexte de flux paquet ou PFC « Packet flow Context » dans l'ancienne cellule est requis dans la nouvelle cellule par une entité SGSN "Serving GPRS Support Node".

19. Entité selon l'une des revendications 17 ou 18, dans laquelle lesdits moyens pour mettre en oeuvre ladite procédure additionnelle de gestion de qualité de service comportent :
- des moyens pour communiquer à une entité SGSN "Serving GPRS Support Node", des informations relatives à la faisabilité dudit transfert d'informations de profil de qualité de service.

20. Entité selon l'une des revendications 17 à 19, dans laquelle lesdits moyens pour mettre en oeuvre ladite procédure additionnelle de gestion de la qualité de service comportent :
- des moyens pour communiquer à une entité SGSN "Serving GPRS Support Node", des informations indiquant si les contextes de flux paquet PFCs d'une station mobile peuvent être transférés ou non à la nouvelle cellule.

21. Entité selon l'une des revendications 17 à 20, comportant des moyens pour communiquer avec une entité SGSN "Serving GPRS Support Node", des informations nécessaires au moyen d'une procédure permettant un transfert vers la nouvelle cellule de données en attente dans l'ancienne cellule.

22. Entité selon la revendication 21, dans laquelle ladite procédure est une procédure de type « FLUSH-LL ».

23. Entité selon la revendication 21, dans laquelle lesdites informations communiquées par ladite entité SGSN à ladite entité BSS sont transmises dans un message « FLUSH-LL PDU».

24. Entité selon la revendication 21, dans laquelle lesdites informations communiquées par ladite entité BSS à ladite entité SGSN sont transmises dans un message « FLUSH-LL-ACK PDU».

## Patentansprüche

1. Verfahren zur Verbesserung der Verwaltung der Dienstgüte in einem paketvermittelten mobilen zellularen Funkkommunikationssystem, wobei das Verfahren **dadurch gekennzeichnet ist, dass**:
- im Fall eines Zellenwechsels, von einer alten Zelle zu einer neuen Zelle, die Informationen über das Dienstgüte-Profil, welches in der alten Zelle ausgehandelt wurde, an die neue Zelle weitergeleitet werden, wobei die besagte Weiterleitung von Informationen über das Dienstgüte-Profil durch eine SGSN-Entität "Serving GPRS Support Node" in einer FLUSH-LL-PDU-Nachricht von einer BSS-Entität "Base Station Subsystem" angefordert wird, und wobei die weitergeleiteten Informationen über das Dienstgüte-Profil einem Kontext eines mit einer Mobilstation assoziierten Teilsystems einer Basisstation oder "BSS Context" oder "Base Station Subsystem Context" entsprechen und mehrere Paketflusskontexte oder PFCs "Packet flow Context" enthalten können,
- ferner eine zusätzliche Prozedur zur Verwaltung der Dienstgüte vorgesehen ist, um eine Minderung der Dienstgüte zu vermeiden, wenn das in der alten Zelle ausgehandelte Dienstgüte-Profil in der neuen Zelle nicht geboten werden kann, wobei die besagte zusätzliche Prozedur zur Verwaltung der Dienstgüte einen Schritt umfasst, in welchem eine Prozedur des Erzeugens eines neuen Paketflusskontextes für die neue Zelle implementiert wird, wenn die Informationen über das Dienstgüte-Profil nicht weitergeleitet werden können, wobei der besagte Kontext durch ein an die neue Zelle angepasstes Dienstgüte-Profil gekennzeichnet ist, wobei die besagte Anpassung das Dienstgüte-Profil, für welches das Funkzugangsnetzwerk angibt, dass es dieses in der neuen Zelle bieten kann, berücksichtigt.

2. Verfahren nach Anspruch 1, wobei das für jeden Paketflusskontext oder PFC "Packet flow Context" in der alten Zelle ausgehandelte Dienstgüte-Profil einem aggregierten Dienstgüte-Profil oder ABQP "Aggregate BSS QoS Profile" entspricht.

3. Verfahren nach Anspruch 2, wobei, sobald für eine Mobilstation in der alten Zelle ein Kontext eines Teilsystems einer Basisstation oder "BSS Context" oder "Base Station Subsystem Context" vorhanden ist, eine Entität des Funkzugangsnetzwerks, insbesondere ein BSS "Base Station Subsystem" annimmt, dass das aggregierte Dienstgüte-Profil oder ABQP "Aggregate BSS QoS Profile", welches für jeden Paketflusskontext oder PFC "Packet flow Context" in der alten Zelle ausgehandelt wurde, von einer Entität des Kernnetzwerks, insbesondere einem SGSN "Serving GPRS Support Node", in der neuen Zelle gefordert wird.

4. Verfahren nach einem der Ansprüche 1 bis 3, wobei die besagte zusätzliche Prozedur zur Verwaltung der Dienstgüte umfasst:
- einen Schritt, in welchem eine BSS-Entität "Base Station Subsystem" einer SGSN-Entität "Serving GPRS Support Node" Informationen in Bezug auf die Durchführbarkeit der besagten Weiterleitung der Informationen über das Dienstgüte-Profil übermittelt.

5. Verfahren nach einem der Ansprüche 1 bis 4, wobei die besagte Prozedur zur Verwaltung der Dienstgüte umfasst:
- einen Schritt, in welchem eine BSS-Entität "Base Station Subsystem" einer SGSN-Entität "Serving GPRS Support Node" Informationen, welche angeben, ob die Paketflusskontexte PFCs einer Mobilstation an die neue Zelle weitergeleitet werden können oder nicht, übermittelt.

6. Verfahren nach einem der Ansprüche 1 bis 5, wobei sich eine SGSN-Entität "Serving GPRS Support Node" und eine BSS-Entität "Base Station Subsystem" die für das Durchführen des besagten Verfahrens anhand einer Prozedur, welche ein Weiterleiten von in der alten Zelle wartenden Daten an die neue Zelle ermöglicht, erforderlichen Informationen übermitteln.

7. Verfahren nach Anspruch 6, wobei die besagte Prozedur eine Prozedur vom Typ "FLUSH-LL" ist.

8. Verfahren nach Anspruch 7, wobei die besagten von der besagten SGSN-Entität an die besagte BSS-Entität übermittelten Informationen in einer "FLUSH-LL-PDU"-Nachricht übertragen werden.

9. Verfahren nach Anspruch 7, wobei die besagten von der besagten BSS-Entität an die besagte SGSN-Entität übermittelten Informationen in einer "FLUSH-LL-ACK-PDU"-Nachricht übertragen werden.

10. SGSN-Entität "Serving GPRS Support Node" für ein paketvermitteltes mobiles zellulares Funkkommunikationssystem, **dadurch gekennzeichnet, dass** sie umfasst:
- Mittel, um im Fall eines Zellenwechsels, von einer alten Zelle zu einer neuen Zelle, von einer BSS-Entität "Base Station Subsystem" in einer FLUSH-LL-PDU-Nachricht das Weiterleiten der Informationen über das Dienstgüte-Profil, welches in der alten Zelle ausgehandelt wurde, an die neue Zelle anzufordern, wobei die weitergeleiteten Informationen über das Dienstgüte-Profil einem Kontext eines mit einer Mobilstation assoziierten Teilsystems einer Basisstation oder "BSS Context" oder "Base Station Subsystem Context" entsprechen und mehrere Paketflusskontexte oder PFCs "Packet flow Context" enthalten können, und wobei das für jeden Paketflusskontext oder PFC "Packet flow Context" in der alten Zelle ausgehandelte Dienstgüte-Profil einem aggregierten Dienstgüte-Profil oder ABQP "Aggregate BSS QoS Profile" entspricht,
- Mittel, um ferner eine zusätzliche Prozedur zur Verwaltung der Dienstgüte durchzuführen, um eine Minderung der Dienstgüte zu vermeiden, wenn das in der alten Zelle ausgehandelte Dienstgüte-Profil in der neuen Zelle nicht geboten werden kann, wobei die besagten Mittel zum Durchführen der besagten zusätzlichen Prozedur zur Verwaltung der Dienstgüte Mittel umfassen, um, wenn die Informationen über das Dienstgüte-Profil nicht weitergeleitet werden können, eine Prozedur zur Erzeugung eines neuen Paketflusskontextes für die neue Zelle durchzuführen, wobei der besagte Kontext durch ein an die neue Zelle angepasstes Dienstgüte-Profil gekennzeichnet ist, wobei die besagte Anpassung das Dienstgüte-Profil, für welches das Funkzugangsnetzwerk angibt, dass es dieses in der neuen Zelle bieten kann, berücksichtigt.

11. Entität nach Anspruch 10, wobei die besagten Mittel zum Durchführen der besagten zusätzlichen Prozedur zur Verwaltung der Dienstgüte umfassen:
- Mittel zum Empfangen von Informationen in Bezug auf die Durchführbarkeit der besagten Weiterleitung von Informationen über das Dienstgüte-Profil von einer BSS-Entität "Base Station Subsystem".

12. Entität nach einem der Ansprüche 10 oder 11, wobei die besagten Mittel zum Durchführen der besagten zusätzlichen Prozedur zur Verwaltung der Dienstgüte umfassen:
- Mittel zum Empfangen von Informationen, welche angeben, ob die Paketflusskontexte PFCs einer Mobilstation an die neue Zelle weitergeleitet werden können oder nicht, von einer BSS-Entität "Base Station Subsystem".

13. Entität nach einem der Ansprüche 10 bis 12, umfassend Mittel zum Übermitteln von erforderlichen Informationen an eine BSS-Entität "Base Station Subsystem" anhand einer Prozedur, welche eine Weiterleitung von in der alten Zelle wartenden Daten an die neue Zelle ermöglicht.

14. Entität nach Anspruch 13, wobei die besagte Prozedur eine Prozedur vom Typ "FLUSH-LL" ist.

15. Entität nach Anspruch 14, wobei die besagten von der besagten SGSN-Entität an die besagte BSS-Entität übermittelten Informationen in einer "FLUSH-LL-PDU"-Nachricht übertragen werden.

16. Entität nach Anspruch 14, wobei die besagten von der besagten BSS-Entität an die besagte SGSN-Entität übermittelten Informationen in einer "FLUSH-LL-ACK-PDU"-Nachricht übertragen werden.

17. BSS-Entität "Base Station Subsystem" für ein paketvermitteltes mobiles zellulares Funkkommunikationssystem, **dadurch gekennzeichnet, dass** sie umfasst:
- Mittel, um im Fall eines Zellenwechsels, von einer alten Zelle zu einer neuen Zelle, auf Anforderung einer SGSN-Entität "Serving GPRS Support Node" in einer FLUSH-LL-PDU-Nachricht Informationen über das in der alten Zelle ausgehandelte Dienstgüte-Profil an die neue Zelle weiterzuleiten, wobei die weitergeleiteten Informationen über das Dienstgüte-Profil einem Kontext eines mit einer Mobilstation assoziierten Teilsystems einer Basisstation oder "BSS Context" oder "Base Station Subsystem Context" entsprechen und mehrere Paketflusskontexte oder PFCs "Packet flow Context" enthalten können, und wobei das für jeden Paketflusskontext oder PFC "Packet flow Context" in der alten Zelle ausgehandelte Dienstgüte-Profil einem aggregierten Dienstgüte-Profil oder ABQP "Aggregate BSS QoS Profile" entspricht,
- Mittel, um ferner eine zusätzliche Prozedur zur Verwaltung der Dienstgüte durchzuführen, um eine Minderung der Dienstgüte zu vermeiden, wenn das in der alten Zelle ausgehandelte Dienstgüte-Profil in der neuen Zelle nicht geboten werden kann, wobei die besagten Mittel zum Durchführen der besagten zusätzlichen Prozedur zur Verwaltung der Dienstgüte Mittel umfassen, um, wenn die Informationen über das Dienstgüte-Profil nicht weitergeleitet werden können, eine Prozedur zur Erzeugung eines neuen Paketflusskontextes für die neue Zelle durchzuführen, wobei der besagte Kontext durch ein an die neue Zelle angepasstes Dienstgüte-Profil gekennzeichnet ist, wobei die besagte Anpassung das Dienstgüte-Profil, für welches das Funkzugangsnetzwerk angibt, dass es dieses in der neuen Zelle bieten kann, berücksichtigt.

18. Entität nach Anspruch 17, wobei, sobald für eine Mobilstation in der alten Zelle ein Kontext eines Teilsystems einer Basisstation oder "BSS Context" oder "Base Station Subsystem Context" vorhanden ist, die besagte Entität annimmt, dass das aggregierte Dienstgüte-Profil oder ABQP "Aggregate BSS QoS Profile", welches für jeden Paketflusskontext oder PFC "Packet flow Context" in der alten Zelle ausgehandelt wurde, von einer SGSN-Entität "Serving GPRS Support Node", in der neuen Zelle gefordert wird.

19. Entität nach einem der Ansprüche 17 oder 18, wobei die besagten Mittel zum Durchführen der besagten zusätzlichen Prozedur zur Verwaltung der Dienstgüte umfassen:
- Mittel zum Übermitteln von Informationen in Bezug auf die Durchführbarkeit der besagten Weiterleitung von Informationen über das Dienstgüte-Profil an eine SGSN-Entität "Serving GPRS Support Node".

20. Entität nach einem der Ansprüche 17 bis 19, wobei die besagten Mittel, welche das Durchführen der besagten zusätzlichen Prozedur zur Verwaltung der Dienstgüte ermöglichen, umfassen:
- Mittel zum Übermitteln von Informationen, welche angeben, ob die Paketflusskontexte PfCs einer Mobilstation an eine neue Zelle übermittelt werden können oder nicht, an eine SGSN-Entität weitergeleitet werden können oder nicht.

21. Entität nach einem der Ansprüche 17 bis 20, umfassend Mittel zum Übermitteln von erforderlichen Informationen an eine SGSN-Entität "Serving GPRS Support Node" anhand einer Prozedur, welche eine Weiterleitung von in der alten Zelle wartenden Daten an die neue Zelle ermöglicht.

22. Entität nach Anspruch 21, wobei die besagte Prozedur eine Prozedur vom Typ "FLUSH-LL" ist.

23. Entität nach Anspruch 21, wobei die besagten von der besagten SGSN-Entität an die besagte BSS-Entität übermittelten Informationen in einer "FLUSH-LL-PDU"-Nachricht übertragen werden.

24. Entität nach Anspruch 21, wobei die besagten von der besagten BSS-Entität an die besagte SGSN-Entität übermittelten Informationen in einer "FLUSH-LL-ACK-PDU"-Nachricht übertragen werden.

## Claims

1. A method to improve the management of quality of service in a mobile cellular radio communications system in packet mode, which method is **characterized in that**:
- when changing cell from an old cell to a new cell, quality of service profile information negotiated within the old cell is transferred to the new cell, said quality of service profile information transfer being requested by a SGSN "Serving GPRS Support Node" entity, to a BSS "Base Station Subsystem" entity in a FLUSH-LL PDU message, and the transferred quality of service profile information corresponding to a base station subsystem context or "BSS Context" associated with a mobile station and which may contain multiple packet flow contexts or PFCs,
- an additional quality of service management procedure is also provided, so as to avoid degrading the quality of service in the event that the quality of service profile negotiated within the old cell cannot be offered in the new cell, said additional quality of service management procedure comprising a step wherein, when quality of service profile information cannot be transferred, a procedure for creating a new packet flow context is implemented for the new cell, said context being **characterized by** a quality of service profile adapted to the new cell, said adaptation taking into account the quality of service profile that the radio access network indicates it can offer within the new cell.

2. A method according to claim 1, wherein the quality of service profile negotiated for each packet flow context or PFC within the old cell corresponds to an aggregate quality of service profile or ABQP for "Aggregate BSS QoS Profile".

3. A method according to claim 2, wherein as soon as there is a base station subsystem context or "BSS Context" for a mobile station in the old cell, a radio access network entity, particularly a BSS for "Base Station Subsystem", assumes that the aggregate quality of service profile or ABQP for "Aggregate BSS QoS Profile" that was negotiated for each packet flow context PFC within the old cell is requested within the new cell by a core network entity, particularly an SGSN or "Serving GPRS Support Node".

4. A method according to one of the claims 1 to 3, wherein said additional quality of service management procedure comprises:
- a step whereby a BSS "Base Station Subsystem" entity communicates to an SGSN "Serving GPRS Support Node" entity information regarding the feasibility of said quality of service profile information transfer.

5. A method according to one of the claims 1 to 4, wherein said additional quality of service management procedure comprises:
- a step whereby a BSS "Base Station Subsystem" entity communicates to an SGSN "Serving GPRS Support Node" entity information indicating whether or not the packet flow contexts PFCs of a mobile station can be transferred to the new cell.

6. A method according to one of the claims 1 to 5, wherein an SGSN "Serving GPRS Support Node" entity and a BSS "Base Station Subsystem" entity communicate to one another information needed to implement said method by means of a procedure enabling a transfer of data waiting in the old cell to the new cell.

7. A method according to claim 6, wherein said procedure is a "FLUSH-LL" procedure.

8. A method according to claim 7, wherein said information communicated by said SGSN entity to said BSS entity is transmitted in a "FLUSH-LL PDU" message.

9. A method according to claim 7, wherein said information communicated by said BSS entity to said SGSN entity is transmitted in a "FLUSH-LL-ACK PDU" message.

10. An SGSN "Serving GPRS Support Node" entity for a packet-mode cellular mobile radio communication system, **characterized in that** it comprises:
- means for, when changing cell from an old cell to a new cell, requesting in a FLUSH-LL PDU message that a BSS "Base Station Subsystem" entity transfer to the new cell quality of service profile information negotiated within the old cell, the transferred quality of service profile information corresponding to a base station subsystem context or "BSS Context" associated with a mobile station and which may contain multiple packet flow contexts or PFCs, and the quality of service profile negotiated for each packet flow context or PFC in the old cell corresponds to an aggregate quality of service profile or ABQP for "Aggregate BSS QoS Profile",
- means for additionally implementing an additional quality of service management procedure, so as to avoid degrading the quality of service in the event that the quality of service profile negotiated within the old cell cannot be offered in the new cell, said means for implementing said additional quality of service management procedure comprising means for, when quality of service profile information cannot be transferred, implementing a procedure for creating a new packet flow context for the new cell, said context being **characterized by** a quality of service profile adapted to the new cell, said adaptation taking into account the quality of service profile that the radio access network indicates it can offer within the new cell.

11. An entity according to claim 10, wherein said means for implementing said additional quality of service management procedure comprise:
- means for receiving from a BSS "Base Station Subsystem" entity information regarding the feasibility of said quality of service profile information transfer.

12. An entity according to one of the claims 10 or 11, wherein said means for implementing said additional quality of service management procedure comprise:
- means for receiving from a BSS "Base Station Subsystem" entity information indicating whether or not the packet flow contexts PFCs of a mobile station can be transferred to the new cell.

13. An entity according to one of the claims 10 to 12, comprising means for communicating the necessary information with a BSS "Base Station Subsystem" entity using a procedure that enables a transfer of data waiting in the old cell to the new cell.

14. An entity according to claim 13, wherein said procedure is a "FLUSH-LL" procedure.

15. An entity according to claim 14, wherein said information communicated by said SGSN entity to said BSS entity is transmitted in a "FLUSH-LL PDU" message.

16. An entity according to claim 14, wherein said information communicated by said BSS entity to said SGSN entity is transmitted in a "FLUSH-LL-ACK PDU" message.

17. A BSS "Base Station Subsystem" entity for a packet-mode cellular mobile radio communication system, **characterized in that** it
comprises:
- means for, when changing cell from an old cell to a new cell, transferring quality of service profile information negotiated within the old cell to the new cell, upon the request of an SGSN "Serving GPRS Support Node" entity in a FLUSH-LL PDU message the transferred quality of service profile information corresponding to a base station subsystem context or "BSS Context" associated with a mobile station and which may contain multiple packet flow contexts or PFCs, and the quality of service profile negotiated for each packet flow context or PFC in the old cell corresponds to an aggregate quality of service profile or ABQP for "Aggregate BSS QoS Profile",
- means for additionally implementing an additional quality of service management procedure, so as to avoid degrading the quality of service in the event that the quality of service profile negotiated within the old cell cannot be offered in the new cell, said means for implementing said additional quality of service management procedure comprising means for, when quality of service profile information cannot be transferred, implementing a procedure for creating a new packet flow context for the new cell, said context being **characterized by** a quality of service profile adapted to the new cell, said adaptation taking into account the quality of service profile that the radio access network indicates it can offer within the new cell.

18. An entity according to claim 17, wherein as soon as there is a base station subsystem context or "BSS Context" for a mobile station in the old cell, said entity assumes that the aggregate quality of service profile or ABQP for "Aggregate BSS QoS Profile" that was negotiated for each packet flow context PFC within the old cell is requested within the new cell by an SGSN or "Serving GPRS Support Node" entity.

19. An entity according to one of the claims 17 or 18, wherein said means for implementing said additional quality of service management procedure comprise:
- means for communicating to an SGSN "Serving GPRS Support Node", entity information regarding the feasibility of said quality of service profile information transfer.

20. An entity according to one of the claims 17 or 19, wherein said means for implementing said additional quality of service management procedure comprise:
- means for communicating to an SGSN "Serving GPRS Support Node" entity information indicating whether or not the packet flow contexts PFCs of a mobile station can be transferred to the new cell.

21. An entity according to one of the claims 17 to 20, comprising means for communicating the necessary information with a SGSN "Base Station Subsystem" entity using a procedure that enables a transfer of data waiting in the old cell to the new cell.

22. An entity according to claim 21, wherein said procedure is a "FLUSH-LL" procedure.

23. An entity according to claim 21, wherein said information communicated by said SGSN entity to said BSS entity is transmitted in a "FLUSH-LL PDU" message.

24. An entity according to claim 21, wherein said information communicated by said BSS entity to said SGSN entity is transmitted in a "FLUSH-LL-ACK PDU" message.
